Europäisches Patentamt

European Patent Office

Office européen des brevets

(19)

(11) Numéro de publication: **0 209 421**
**B1**

(12) **FASCICULE DE BREVET EUROPEEN**

(45) Date de publication du fascicule du brevet: **05.09.90**

(51) Int. Cl.⁵: **H 02 J 3/14**

(21) Numéro de dépôt: **86401269.5**

(22) Date de dépôt: **11.06.86**

(54) **Appareil de répartition de puissance automatique pour installations électriques domestiques et installations analogues.**

(30) Priorité: **11.06.85 FR 8508780**

(43) Date de publication de la demande:
**21.01.87 Bulletin 87/04**

(45) Mention de la délivrance du brevet:
**05.09.90 Bulletin 90/36**

(84) Etats contractants désignés:
**AT BE CH DE FR GB IT LI NL**

(56) Documents cités:
**FR-A-2 444 969**
**US-A-3 987 308**

(73) Titulaire: **HAGER ELECTRO S.A.**
**Boulevard d'Europe**
**F-67210 Obernai (FR)**

(72) Inventeur: **Mauvily, Roger**
**24 rue Zornhoff**
**F-67700 Saverne (FR)**

(74) Mandataire: **Bernasconi, Jean et al**
**CABINET LEMOINE ET BERNASCONI 13,**
**Boulevard des Batignolles**
**F-75008 Paris (FR)**

EP 0 209 421 B1

## Description

L'invention est relative à un appareil de répartition de puissance automatique pour installations électriques de l'habitat domestique et du petit tertiaire. Elle concerne plus particulièrement un appareil de répartition de puissance pour installations électriques comportant n groupes d'appareils de chauffage électriques destinés à chauffer chacun une zone de l'habitat, l'une au moins de ces zones étant, de préférence, équipée d'un régulateur de chauffage à action chronoproportionnelle ou non, c'est-à-dire un régulateur sensible à la température moyenne de la zone considérée et propre à limiter la durée d'alimentation de l'un ou de l'ensemble des groupes d'appareils chaque fois à une fraction de période ou "taux de fonctionnement", qui varie en fonction de ladite température, cette période étant définie par construction dans le régulateur. Dans ce qui précède, n est un nombre entier au moins égal à 2 et généralement égal à 3.

Comme on le sait, les contrats d'abonnement d'électricité sont d'autant plus coûteux que la puissance souscrite est plus élevée et l'intérêt de l'usager est donc de pouvoir souscrire le minimum de puissance compatible avec les divers appareils consommateurs de l'installation (appareils de chauffage des locaux et chauffage d'eau; appareils ménagers tels que cuisinières et plaques chauffantes, machines à laver le linge et la vaisselle; appareils d'éclairage, etc.).

Pour limiter la consommation globale instantanée, on connaît un appareil de délestage qui se comporte comme un disjoncteur à réarmement automatique et qui coupe momentanément pour une durée fixe, déterminée par construction, l'alimentation électrique de circuits non prioritaires aussitôt que ladite puissance dépasse un certain seuil qui est déterminé par le contrat passé avec le fournisseur d'énergie. En général, ces circuits non prioritaires sont des circuits de chauffage. Cette solution ne présente guère d'inconvénient lorsque la coupure de ces derniers circuits est de faible durée. En revanche, lorsque le seuil du contrat est trop faible, le délestage intervient trop fréquemment et interdit par conséquent un fonctionnement normal des circuits non prioritaires. L'appareil de délestage a ainsi une influence très défavorable sur le confort du local habité.

On connaît aussi des installations de chauffage équipées de régulateurs à action proportionnele ou non, mais ceux-ci agissent indépendamment les uns des autres et n'empêchent donc pas l'appel de puissance simultané des groupes d'appareils de chauffage.

Ainsi, le brevet FR—A—2 444 969 décrit un dispositif de commande de plusieurs circuits d'utilisation tels que des appareils de chauffage permettant la régulation de ces appareils selon un procédé de commande par paquet d'oscillations et dans lequel les temps de fermeture sont variables indépendamment les uns des autres. Les moyens de commande décrits dans ce dispositif sont étroitement liés au type de régulation des appareils de chauffage qu'ils commandent. Ce dispositif établit une période T d'oscillation de tension en dents de scie à fréquence supérieure à une période du réseau alternatif et définissant la période des cycles des appareils de chauffage, pour répartir le branchement successif des appareils dans le temps en empêchant que plusieurs appareils puissent être branchés simultanément. Un tel dispositif présente notamment l'inconvénient d'empêcher que plusieurs appareils utilisateurs puissent fonctionner en même temps.

Enfin, on connaît, par le brevet US—A—3 987 308, un dispositif délesteur qui compare la puissance consommée dans une installation à une limite prédéterminée et ajoute ou supprime des appareils utilisateurs selon le résultat de cette comparaison en décalant, si nécessaire, le moment où un appareil peut être autorisé à fonctionner. Une telle disposition perturbe grandement la régulation des appareils utilisateurs et nécessite, en fait, le choix d'appareils préférés qui ne seront amais délestés.

L'invention a pour but de créer un appareil automatique qui supprime les inconvénients rappelés ci-dessus des appareils de délestage connus. Elle a, en particulier, pour but de créer un appareil qui soit capable de répartir automatiquement le courant électrique entre divers circuits consommateurs de façon que la consommation globale instantanée soit toujours inférieure à la somme des consommations individuelles instantanées des circuits consommateurs, évitant ainsi le déplacement du seuil défini par le contrat souscrit dans l'abonnement, et ceci sans nécessiter d'établir, entre les appareils, une hiérarchie susceptible d'inclure l'exclusion permanente et systématique de certains d'entre eux.

Un autre but encore de l'invention est de créer un tel appareil qui puisse être monté sans difficulté par un installateur de compétence normale.

Pour atteindre ces buts, l'invention a pour objet un appareil de répartition de puissance pour installations électriques comprenant un groupe d'appareils de chauffage électriques destinés à chauffer chacun une zone de l'habitat, l'une au moins de ces zones étant équipée de moyens de régulation possédant, au moins d'une façon approximative, un cycle dont la durée, appelée période T, comporte normalement une première partie pendant laquelle le groupe d'appareils est alimenté et une seconde partie pendant laquelle ledit groupe est peu, ou pas, alimenté, ledit appareil comprenant des moyens pour provoquer la mise en marche des groupes d'appareils de chauffage respectivement aux instants $0$, $P/m$, $2P/m$, ... $P$, au cours de chaque période, d'une durée $P$, caractérisé en ce que la durée $P$ est voisine de ou égale à $T$, et en ce que, $m$ étant un nombre entier supérieur ou égal à $n$, lesdits moyens n-autorisent l'alimentation d'un groupe d'appareils de chauffage que pendant une durée au plus égale à $(m-1)P/m$.

De préférence la durée $P$ est égale à la période $T$, lorsque celle-ci peut être définie de façon précise. Néanmoins cette durée $P$ peut être quelque peu inférieure ou de préférence un peu supérieure à la durée T. Ceci peut être notamment le cas lorsque les moyens de régulation sont tels que la période T ne peut être définie que d'une façon approximative, par exemple dans le cas de moyens de régulation peu élaborés, comme les moyens de régulation par bilames ou thermostats usuels.

Le nombre m est de préférence égal à n, c'est-à-dire au nombre de groupes d'appareils de chauffage, mais il peut exceptionnellement être un peu plus grand, du fait notamment que l'on peut utiliser, bien qu'avec un rendement moindre, un appareil de répartition selon l'invention prévu normalement pour m groupes d'appareils de chauffage, pour un nombre de groupes moindre. Dans ce cas cependant aucun groupe n'est alimenté pendant une ou plusieurs fractions P/m.

Par groupe d'appareils de chauffage dans le sens de la présente invention, on entend on ensemble qui peut être constitué d'un ou plusieurs appareils de chauffage. Lorsque le groupe ne contient qu'un appareil de chauffage, celui-ci est associé à des moyens de régulation. Lorsque le groupe comporte plusieurs appareils de chauffage, l'un au moins de ces appareils est associé à des moyens de régulation.

Lorsque, comme cela est de préférence le cas, plusieurs, ou la totalité des groupes sont associés à des moyens de régulation ceux-ci sont choisis de façon à posséder la même période T de cycle, ou en tout cas des périodes voisines.

Comme cela a été dit, les moyens de régulation peuvent ne pas avoir une période T précisément définie. Cela est la cas notamment lorsque ces moyens de régulation sont basés sur des thermostats peu élaborés.

Cependant, selon un mode de réalisation préféré, l'appareil de répartition de puissance selon l'invention est mis en oeuvre dans des installations comportant, pour l'une au moins des zones correspondant aux différents groupes, un régulateur de chauffage à action proportionnelle, c'est-à-dire un régulateur sensible à la température moyenne de la zone considérée et propre à limiter la durée d'alimentation de l'un ou de l'ensemble des groupes d'appareils chaque fois à une fraction de période ou "taux de fonctionnement", qui varie en fonction de ladite température, cette période (éventuellement réglable) étant définie par construction dans le régulateur.

Dans ce mode de realisation, l'appareil selon l'invention peut être mis en oeuvre sans tenir compte du signal du régulateur à action proportionnelle. En d'autres termes dans ce cas, comme d'ailleurs dans le mode de mise en oeuvre dans lequel la période T n'est pas bien définie, l'appareil selon l'invention se contente de provoquer la mise en marche des groupes d'appareils de chauffage respectivement aux différents instants régulièrement répartis, selon l'invention, dans la durée P, laquelle est de préférence égale à la période T, l'appareil, lorsqu'il autorise l'alimentation de l'un des groupes d'appareils de chauffage, n'étant alors pas sensible à l'arrêt (ou la diminution) de cette alimentation provoqué par les moyens de régulation de la zone associée à ce groupe.

Ainsi les différents démarrages de l'alimentation des différents groupes d'appareils de chauffage se trouvent régulièrement répartis dans le temps à l'intérieur de la durée P et l'on peut ainsi, en tenant compte du nombre de groupes d'appareils munis desdits moyens de régulation et du taux de fonctionnement, obtenir qu'à tout instant l'un au moins des groupes n'est pas alimenté, de sorte que la puissance effectivement appelée par les groupes est à chaque instant inférieure à la somme des puissances nominales susceptibles d'être consommées par les différents groupes d'appareils.

Des moyens sont prévus pour interrompre l'alimentation d'un groupe d'appareils après une durée égale à $(m-1)P/m$.

Selon un perfectionnement de l'invention, et notamment dans le cas de l'application à des groupes munis de moyens de régulation de chauffage à action proportionnelle, l'appareil répartiteur selon l'invention peut être sensible au signal du régulateur d'une, de plusieurs ou de la totalité desdites zones qui en sont pourvues et commander l'alimentation du groupe correspondant à cette zone en la faisant débuter à l'instant prévu conformément à l'invention et en la faisant cesser à la fin du signal de régulation.

Au cours de chaque période, les groupes d'appareils sont ainsi mis en marche à des instants décalés successivement de la valeur P/n et arrêtés ensuite à des instants qui dépendent du taux de fonctionnement du ou des régulateurs de chauffage à action proportionnelle. Ainsi qu'il sera expliqué plus en détail ci-après à l'aide des dessins, ce décalage des mises en marche des groupes d'appareils de chauffage répartit cycliquement la puissance à ces groupes et élimine en fonctionnement normal la probabilité pour que tous ceux-ci appellent simultanément de la puissance, à condition que le pourcentage de surpuissance installée soit au moins égal à 100/n %.

La valeur de la durée P, laquelle est de préférence égale à la période T, dépend comme cela a été dit, de la valeur de cette période T et est généralement de l'ordre de quelques minutes. De préférence elle est supérieure à 30 secondes, en général de l'ordre de 5 minutes mais peut être plus longue, notamment avec des moyens de régulation tels que des thermostats bilames, auquel cas elle peut atteindre 15 à 20 minutes.

Selon un perfectionnement de l'invention applicable aux installations électriques comportant, outre des groupes d'appareils de chauffage considérés comme non-prioritaires, des appareils consommateurs prioritaires tels que des appareils ménagers et des appareils d'éclairage, l'appareil de répartition de puissance conforme à l'invention est en outre sensible à des moyens pour mesurer la consommation globale instantanée de l'installation (appareils consommateurs prioritaires et non-prioritaires) et est agencé de façon à délester un ou plusieurs groupes d'appareils de chauffage et de préférence celui ou ceux qui ont fonctionné le plus longtemps depuis la dernière remise en route à l'instant où un dépassement du seuil de consommation globale est constaté par ces moyens.

Dans un mode de mise en oeuvre simple de ce perfectionnement, l'appareil de répartition peut ne pas être sensible à la durée d'alimentation des différents groupes d'appareils de chauffage et, dans ce cas, il est de préférence agencé, lorsque le dépassement du seuil de consommation est constaté, pour délester celui des groupes qui vient d'être alimenté en dernier et/ou l'avant-dernier et/ou l'antépénultième etc, ceci en fonction du nombre de groupes mis en oeuvre.

Cependant dans un mode de mise en oeuvre préféré de ce perfectionnement, on déleste celui des groupes qui fonctionne encore au moment où le dépassement du seuil de consommation globale est constaté, et qui a fonctionné le plus longtemps, l'appareil selon l'invention étant alors sensible à cette durée de fonctionnement soit en mémorisant cycliquement les durées des signaux de régulation lorsqu'il est sensible à ces signaux, soit en mémorisant cycliquement simplement les durées d'alimentation électrique des différents groupes.

De cette façon, on est toujours assuré que les appareils de consommation prioritaires sont ou peuvent être alimentés en courant électrique. De leur côté, les groupes d'appareils non prioritaires restent alimentés chacun suffisamment longtemps au cours de chaque période pour que le confort de l'habitat ne risque pas d'être compromis. Il n'y a donc pas de hiérarchie de délestage imposée par construction mais une séquence d'arrêt qui dépend des besoins réels de l'installation.

L'invention a également pour objet les applications de l'appareil selon l'invention aux différentes installations électriques décrites ci-dessus.

D'autres avantages et caractéristiques de l'invention apparaîtront dans la lecture de la description suivante faite à titre d'exemple non limitatif, se référant au dessin annexé dans lequel:

la figure 1 présente le schéma d'une installation électrique incorporant un appareil selon une premier mode de mise en oeuvre de l'invention;

la figure 2 représente le schéma de l'appareil de la figure 1 lui-même;

la figure 3 représente un graphique de répartition des alimentations en l'absence de délestage dans le cas de l'installation de la figure 1;

la figure 4 représente un graphique de consommation réelle de l'installation alimentée selon la figure 2, en l'absence de délestage;

la figure 5 représente un graphique de répartition avec délestage dans le cas de l'installation de la figure 1;

la figure 6 représente le schéma d'une installation électrique monophasée dans un deuxième mode de mise en oeuvre de l'invention;

la figure 7 représente le schéma de l'appareil de répartition de la figure 6;

la figure 8 représente un graphique de répartition sans délestage de l'installation de la figure 6;

la figure 9 représente un graphique de répartition avec délestage de l'installation de la figure 6;

la figure 10 représente un graphique de répartition sans délestage dans le cas d'une variante de branchement de l'installation sur la figure 6.

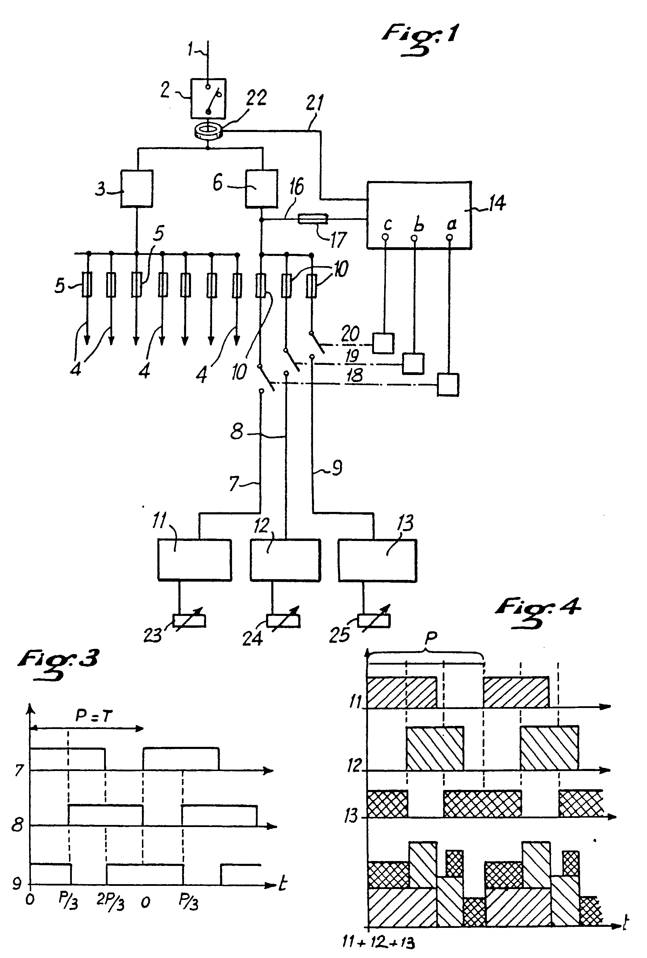

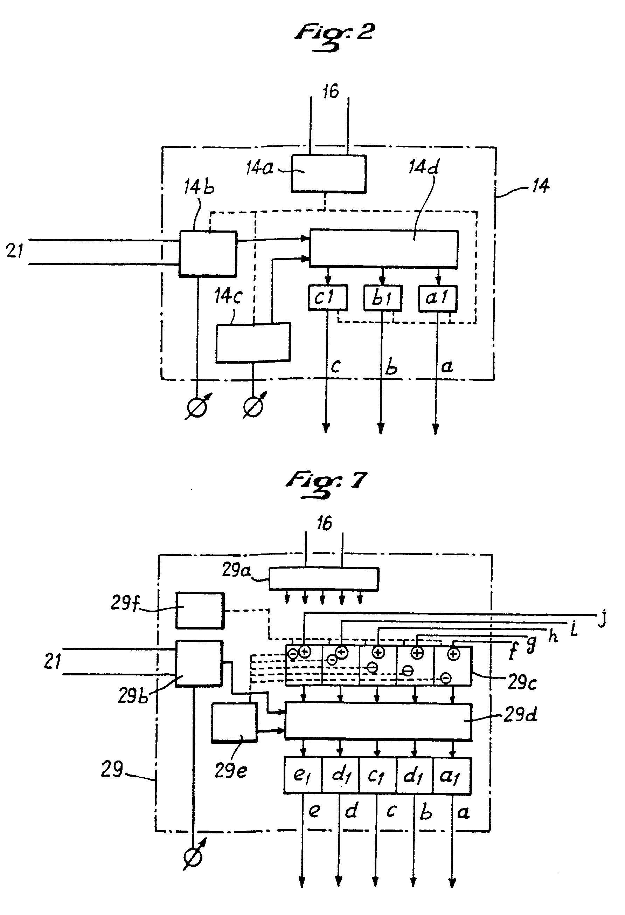

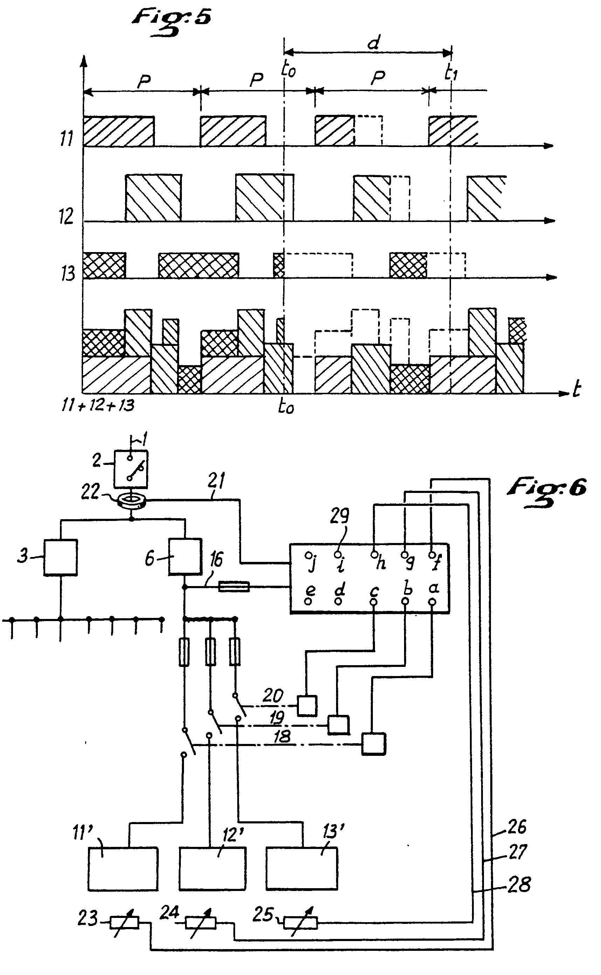

On se réfère tout d'abord aux figures 1 à 5.

L'installation domestique représentée est alimentée depuis le secteur 1 par une disjoncteur de branchement non différentiel 2 dont les caractéristiques sont liées à l'abonnement souscrit auprès de la compagnie fournissant l'électricité. De là, un dispositif différentiel usuel 3 permet d'alimenter une pluralité de lignes parallèles 4, protégées par les fusibles 5 et correspondant à des éclairages, prises de courant, appareils de cuisson, chauffe-eau, machines à laver etc. Le disjoncteur 2, par l'intermédiaire d'un dispositif différentiel de commande générale de chauffage 6, alimente également trois lignes 7, 8, 9 protégées par leurs fusibles 10 et desservant trois autres groupes d'appareils de chauffage électriques 11, 12, 13 chauffant trois zones différentes de l'habitation. Dans un but de simplification, chaque groupe 11, 12, 13 ne comporte qu'un seul appareil de chauffage et chacun de ces appareils, d'un type tout à fait usuel, comporte un régulateur proportionnel 23, 24 ou 25 régle, par construction, à une période T de 5 minutes par exemple. Ceci veut dire que toutes les 5 minutes, le régulateur d'un appareil ferme un contact d'alimentation interne à l'appareil et autorise le passage du courant. Au bout d'une durée inférieure à T, et dont la longueur est déterminée par le thermostat du régulateur, le contact est à nouveau ouvert et l'appareil n'est pas alimenté pendant le reste de la période. Dans ces dispositifs, la durée d'alimentation, et donc le taux de fonctionnement, dépendent de la température de la zone contrôlée par ce thermostat et plus la zone est froide, plus le taux de fonctionnement est important, le taux de fonctionnement devenant presque nul lorsque la température de réglage du thermostat est atteinte. La période de 5 minutes, dans chaque régulateur 23, 24, 25, est déterminée par une base de temps interne à chaque régulateur.

L'appareil de répartition de courant selon l'invention, 14, est alimenté par une dérivation 16 protégée par un fusible 17, en aval du dispositif 6. Il possède trois sorties a, b, c, lui permettant d'actionner trois relais 18, 19, 20 susceptibles d'ouvrir ou de fermer les lignes 7, 8 et 9 d'alimentation des groupes 11, 12 et 13 d'appareils de chauffage. Ces relais pourraient être remplacés par des semi-conducteurs de puissance; le cas échéant, les relais ou les semi-conducteurs de puissance pourraient être incorporés dans le boîtier de l'appareil 14 et, dans ce cas, ce sont les lignes d'alimentation 7, 8 et 9 qui devraient être directement branchées sur les sorties a, b et c.

Le dispositif 14 comporte un circuit de déphasage incorporant une base de temps réglable. Ce dispositif est alimenté par la ligne 16. Plus précisément, il comporte une alimentation stabilisée 14 a alimentée par la ligne 16, un circuit de détection de courant 14 b sensible à l'information provenant de la ligne 21 et dont le seuil est réglable, la base de temps 14 c qui génère à chaque instant 0, P/3, 2P/3 un signal, un circuit logique de répartition 14 d sensible à ce signal et agissant tout à tour sur les sorties a, b, c par l'intermédiaire d'interfaces de commande respectives a1, b1, c1. La base de temps est réglée à une durée P=T soit P=5 minutes. Le circuit de déphasage fonctionne de la façon suivante:

Au début d'une période déterminée par la base de temps, soit à l'instant 0, il alimente la sortie a et excite le relais 18, ce qui autorise immédiatement l'alimentation de la ligne 7 et du groupe d'appareils 11, et ceci pendant une durée égale à 2P/3. A l'instant P/3 de la période, alors que le relais 18 est toujours excité, le circuit de répartition excite le relais 19, ce qui autorise l'alimentation du groupe d'appareils 12 pendant une durée également de 2P/3. A l'instant 2P/3, le circuit excite le relais 20 et le groupe d'appareils 13 est également alimenté par la ligne 9. A ce même moment, il désexcite le relais 18 et le groupe d'appareils 11 n'est plus alimenté. A la fin de la période, le relais 18 est excité et c'est le relais 19 qui est désexcité, le cycle se poursuivant de cette façon.

On voit, en se référant à la figure 3, le diagramme des durées d'autorisation d'alimentation des lignes 7, 8 et 9. On voit qu'à un instant donné, seules deux lignes sont simultanément alimentées.

Il en résulte que, au plus, seuls deux des groupes d'appareils de chauffage 11, 12 et 13 fonctionnent à la fois.

Dans cette forme de réalisation, chaque groupe d'appareils de chauffage ne peut fonctionner, chaque fois qu'au plus pendant les deux tiers de la période P puisque l'alimentation lui est ensuite supprimée pendant le dernier tiers de la période. En fait, dans les appareils de chauffage pilotés par un régulateur à action proportionnelle, on constate que les taux de fonctionnement, c'est-à-dire le rapport de la durée de fonctionnement sur la période, sont au plus de l'ordre de 60%. Il en résulte que, dans la pratique, aucun des appareils ne se trouve pénalisé et ne voit son alimentation supprimée à un moment où il en aurait besoin.

Dans cette forme de réalisation, il est avantageux de donner à la période P une durée égale ou voisine de T. Si P était trop long, la durée entre deux alimentations successives d'un même groupe d'appareils s'accroîtrait inutilement. Si au contraire P était inférieur à T, il se poserait des problèmes avec les bases de temps propres aux différents régulateurs et il est dont préférable de fixer P=T.

En fait, comme cela a été dit, chaque groupe d'appareils fonctionne avec un taux inférieur à 66% de sorte qu'il n'utilise pas toute la plage d'alimentation qui lui est consentie par l'appareil de répartition 14. En d'autres termes, il s'arrête de fonctionner avant que son relais d'alimentation ne soit désexcité.

On voit sur la figure 4 un schéma montrant les puissances consommés pour chaque groupe d'appareils 11, 12, 13, l'appareil 13 étant supposé fonctionner pendant toute la période où la ligne 9 est alimentée. On voit sur la ligne résultante qui montre la somme des puissances qu'à aucun moment la puissance consommée n'est égale à la somme des puissances nominales des trois groupes d'appareils 11, 12 et 13, mais égale au plus à la somme de deux puissances nominales.

Comme cela a été dit ci-dessus, dans le cas de groupes d'appareils comprenant, au moins pour certains d'entre eux, des régulateurs à action proportionnelle, la durée P est de préférence pratiquement égale à T.

Si maintenant les appareils de chauffage 11, 12 et 13 ne sont pas munis de régulateurs à ion proportionnelle mais de régulateurs basés sur des thermostats moins précis et ayant une plus grande inertie, il sera nécessaire de déterminer tout d'abord de façon approximative la "période" T correspondant à un cycle de fonctionnement des appareils ou groupe d'appareils qui sont supposés, de ce point de vue, être sensiblement identiques. Si cette période, qui peut quelque peu varier suivant que l'appareil est en chauffe ou a atteint le voisinage de la température de régulation, est par exemple de l'order de 12 à 15 minutes, la période P sera choisie de préférence un peu supérieure, par exemple de 18 minutes, le fonctionnement restant le même. Cette modification peut être obtenue simplement en réglant la base de temps du circuit de répartition de l'appareil 14.

Dans la forme de réalisation représentée, l'appareil 14 comporte de plus des moyens de délestage. Dans ce but, il est raccordé, par une ligne 21, à un capteur 22 susceptible de lui indiquer à chaque instant la puissance effectivement consommée par l'installation électrique. Si à un moment donné, malgré la répartition des alimentations, conformément à l'invention, la puissance totale appelée de l'installation dépasse une valeur seuil fixé à un niveau légérement inférieur à celle qui va provoquer le déclenchement du disjoncteur 2, l'appareil 14 va alors délester les groupes d'appareils de chauffage. Un tel appel de puissance exagérée peut par exemple provenir de la mise en marche d'un grand nombre d'appareils domestiques dont la consommation vient s'ajouter à celle des appareils de chauffage, ces appareils domestiques étant considérés comme prioritaires par rapport aux appareils de chauffage.

L'appareil 14 comporte donc un circuit électronique usuel 14 b, sensible à l'information provenant de la ligne 21, qui est prévu pour émettre un signal si la puissance traversant le disjoncteur dépasse la valeur fixée à l'avance. Ce signal est traité par une logique (non représentée) associée au circuit 14 d qui, agissant sur le circuit de répartition par l'intermédiaire des relais, provoque l'arrêt de celui des groupes 11, 12, 13 qui vient d'être alimenté en premier (ou, dans une variante, en dernier).

Cependent dans un perfectionnement, comme on le verra ultérieurement, il serait également possible de prévoir, dans l'appareil 14, des moyens qui mémorisent cycliquement la durée réelle d'alimentation de chacun des groupes d'appareils de chauffage 11, 12, 13 pour délester celui des groupes qui, tout en étant en cours de fonctionnement, a fonctionné le plus longtemps, et dans ce cas l'appareil peut comprendre des capteurs ou autres moyens l'informant du passage réel de l'intensité dans les lignes 7, 8 ou 9.

Différentes autres variantes, non préférées, de délestage sont également possibles, établissant par exemple une priorité de délestage bien que ceci soit rarement souhaitable.

Lorsque arrive à nouveau une commutation sous l'influence du circuit de répartition, la logique est telle que le groupe qui doit être alimenté à ce moment-là est effectivement alimenté mais se trouve arrêté dès que le circuit correspondant est mis en marche.

On a représenté sur la figure 5 le cas d'un délestage survenant dans un fonctionnement de répartition conforme à celui représenté sur la figure 4.

La surpuissance est détectée à l'instant t0 et dure jusqu'à l'instant t1 pendant une durée d, qui le cas représenté est supérieure à la longueur d'une période P. Plus précisément, on voit que la surpuissance intervient à l'instant t0 peu après que le relais 20 a autorise l'alimentation du groupe d'appareils 13, et alors que le groupe d'appareils 12 est encore en fonctionnement. Le groupe 13 est immédiatement délesté pendant que le groupe 12 continue à fonctionner normalement. A la fin de la période P en cours, on voit que le groupe 11 est autorisé à fonctionner mais seulement jusqu'à ce que le groupe 12 soit autorisé à fonctionner et celui-ci ne fonctionne que jusqu'au moment où le groupe 13 est appelé à fonctionner et ainsi de suite. Après l'instant t1, le fonctionnement redevient normal.

On a représenté sur le dessin en traits interrompus les surpuissance délestées.

On se réfère maintenant aux figures 6 à 10.

On a représente sur la figure 6 une installation électrique identique à celle de la figure 1 mais dans laquelle cette fois-ci les régulateurs 23, 24, 25 sont à commande proportionnelle mais, au lieu d'être reliés aux groupes correspondants de leurs zones, à savoir les groupes respectifs 11', 12', 13', se trouvent reliés par des lignes 26, 27 et 28 à trois entrées supplémentaires f, g et h d'un groupe de cinq entrées f, g, h, i et j disposées en plus du groupe des cinq sorties a, b, c, d, e qui ont le même rôle que les sorties a, b et c de l'appareil 14. En fait l'appariel de répartition 29, en ce qui concerne les sorties a, b, c, d, e, est du même type que l'appareil 14 et possède un circuit de répartition susceptible d'actionner l'un après l'autre et dans des intervalles de temps égaux un maximum de cinq relais. En fait, dans l'exemple, l'appareil est utilisé uniquement avec trois relais 18, 19, 20 branchés sur les sorties a, b et c, et l'appareil a été réglé de façon à diviser la période P en trois intervalles de temps égaux pour déterminer les instants 0, P/3 et 2P/3. La période P est également de préférence la période T commune aux trois appareils 11', 12', 13' avec leurs régulateurs respectifs 23, 24 et 25.

Dans ce mode de mise en oeuvre, le circuit de répartition comporte une partie gérant les entrées en provenance des régulateurs, c'est-à-dire, en l'occurrence les entrées f, g, h qui correspondent aux sorties a, b, c. Cette partie du circuit de répartition déphase successivement chacune des entrées f, g et h à partir des instants respectifs 0, P/3 et 2 P/3 de sorte que chacune des sorties correspondantes est successivement activée avec le même déphasage et pour une durée correspondant au signal donné par le régulateur proportionnel associée.

Ainsi l'appareil 29, qui comporte une alimentation 29 a alimentée par la ligne 16 et un organe de détection 29 b à seuil réglable, sensible au capteur 22, comporte un circuit logique de répartition 29 c, analogue au circuit 14 d, mais cette fois-ci sensible aux entrées f, g, h, i, j. Le circuit 29 c commande, par l'intermédiaire d'un circuit logique de délestage 29 d, les sorties a, b, c, d, e avec leurs interfaces a1, b1, c1, d1, e1. Une base de temps 29 e pilote aussi bien le circuit de répartition 29 c que le circuit de délestage 29 d. Enfin, une horloge 29 f adresse ses impulsions aux différents compteurs du circuit 29 c.

La base de temps 29 e valide successivement les sorties a, b, c aux instants 0, P/3, 2P/3 en agissant sur le circuit 29 c.

Les régulateurs à action proportionnelle 23, 24 et 25, quant à eux, émettent un signal qui débute au début d'une période de fonctionnement propre aux régulateurs considérés et qui dure tant que le thermostat du régulateur appelle du courant d'alimentation, après quoi le signal devient nul jusqu'au début de la période suivante.

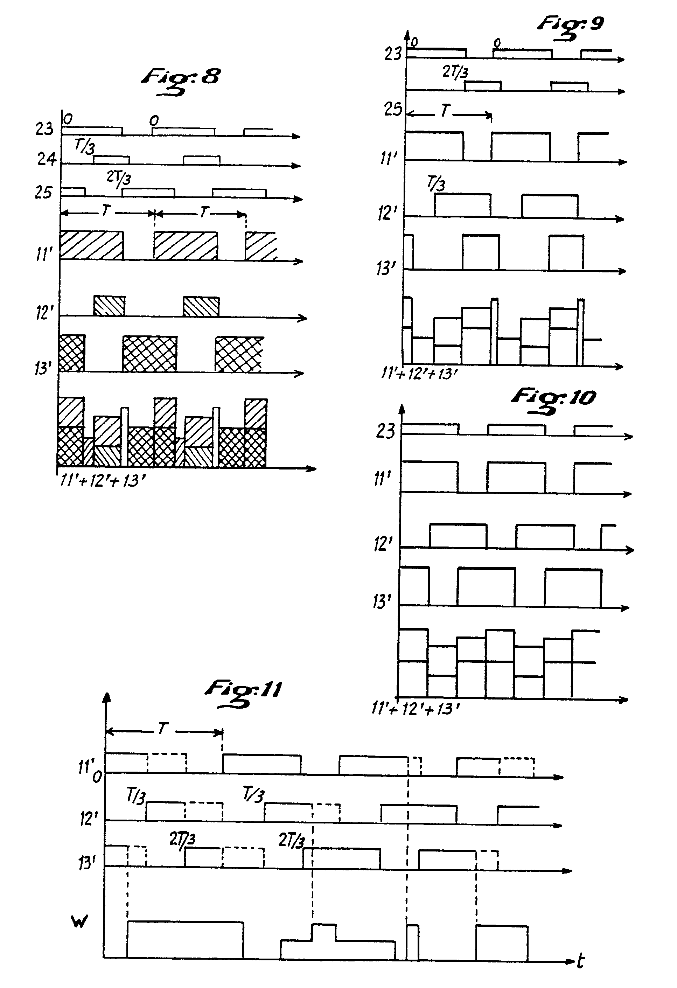

Dans un but de simplification de l'exposé, on admettra que les périodes des trois régulateurs 23, 24 et 25 sont rigoureusement identiques et égales à T, que la période P de l'appareil 29 est également égale à T et que, dans les quatre dispositifs 23, 24, 25, 29, la période commence exactement au même moment. En d'autres termes, les quatre dispositifs sont exactement synchronisés. Ceci peut être effectué, par exemple en utilisant dans l'appareil 29 la base de temps 29 e réglée à la période T pour synchroniser également les trois régulateurs 23, 24, 25, ou bien en utilisant encore l'un des régulateurs 23, 24, 25 pour synchroniser le reste de l'installation. Cependant, comme on le verra par la suite, cette synchronisation n'est pas en fait nécessaire, l'essentiel étant que les périodes des trois régulateurs 23, 24, 25 soient à peu près égales. Ceci étant exposé, on suppose que le circuit de répartition de l'appareil 29 soit, à l'instant 0, sensible à l'entrée f. Simultanément le régulateur 23 émet un signal qui apparaît à la figure 8 sur la ligne 23.

Ce signal dure par exemple pendant deux tiers de T, l'appareil 11' appelant par exemple un maximum de puissance. A l'instant T/3, l'entrée g est validée et sur elle apparaît le signal de la ligne 24 émis par le régulateur 24. A l'instant 2T/3 apparaît le signal de la ligne 25. Les durées des signaux des lignes de régulateurs 23, 24 et 25 sont différentes, étant déterminées par les régulateurs 23, 24, 25 des trois zones desservies par les groupes 11', 12', 13'. L'admission de ces signaux dans l'appareil 29 provoque, pendant toute la durée perçue à l'intérieur de l'appareil 29 pour chacun des signaux, la mise sous tension de la sortie a, b, c correspondante et donc l'excitation du relais 18, 19 ou 20 correspondant. On voit, grâce à l'invention, que la somme des puissances appelées sur la ligne 11'+12'+13' du diagramme ne dépasse pas la somme des puissances consommées par deux groupes d'appareils de chauffage.

L'appareil 29 peut ne pas comporter de moyens pour rendre insensibles les entrées f, g, h, dans la mesure où les taux de fonctionnement des groupes n'atteignent jamais, dans la pratique, la valeur de 66%. En cas de dépassement, on fait intervenir une fonction délestage si la surintensité le justifie.

L'appareil peut bien entendu fonctionner d'une autre façon. Ainsi il serait par exemple possible de supprimer l'un des régulateurs, par exemple le régulateur 24, et de relier sont entrée g à l'une des deux autres entrées, par exemple f. Dans ce cas on obtient le diagramme représenté sur la figure 9 et qui correspond au fonctionnement suivant: à l'instant 0, sur la ligne 26 provenant du régulateur 23, on voit n signal adressé à l'entrée f. Comme précédemment, le groupe 11' est alimenté par l'intermédiaire du relais 18 excité pendant la même durée que le signal provenant du régulateur 23.

Le circuit de répartition 29 c, en outre, va attendre l'instant T/3 et à ce moment-là va exciter le relais 19 et dont alimenter le groupe 12', et ceci pendant une durée identique à celle de l'alimentation du groupe 11' mais décalée d'un tiers de période dans le temps, grâce à une mémoire qui emmagasine la durée du signal 23. Dans ce cas, le régulateur 23 pilote également la zone du groupe d'appareils 12'.

A l'instant 2T/3, le signal en provenance du régulateur 25 va arriver à l'entrée h et va alors piloter le fonctionnement du relais 20 et l'alimentation du groupe 13' pendant toute la durée de ce signal. On voit également que, dans ce cas, la somme des puissances consommées ne dépasse jamais la somme des puissances de deux groupes d'appareils.

Sur la figure 10, on a représenté le cas où un seul régulateur, par exemple le régulateur 23, commande les trois groupes d'appareils, le circuit de répartition décalant successivement aux instants 0, P/3 et 2P/3 l'actionnement des différents relais 18, 19 et 20, les relais restant respectivement excités chaque fois pendant une durée égale à la longueur du signal 23. On a supposé, dans un but de simplification du dessin, que le signal est égal à chaque fois deux tiers de période.

Dans un but de simplification, on a jusqu'à présent considéré que des moyens actifs de synchronisation existaient entre les différents régulateurs actifs et l'appareil 29. Cependant, en fait, on peut se passer de tels moyens actifs de synchronisation ce qui évite tout raccordement supplémentaire. Dans ce cas, on associe à chacune des entrées f, g, h, i et j une mémoire qui va être sensible à la durée du signal adressé par le régulateur branché sur l'entrée en question. Ces mémoires sont constituées par les compteurs précités du circuit de répartition 29 c, et utilisent les impulsions de l'horloge 29 f pour mémoriser les durées respectives des signaux des régulateurs respectifs. Par contre l'appareil de répartition décide lui-même du début de chaque période en se calant une fois pour toute, ou régulièrement, sur le premier front ascendant de l'un des signaux de régulateurs qu'il détecte au moment où on le met en marche. Dans le mode de fonctionnement de la figure 8, il alimentera donc chaque groupe d'appareils 11', 12', 13', pendant une durée égale au signal du régulateur correspondant mais en répartissant les débuts de chacune des alimentations aux instants respectifs 0, T/3 et 2T/3.

Bien entendu, en raison des différences toujours existantes entre les périodes des différents régulateurs qui ne sont jamais exactement égales entres elles, il arrivera des moments où l'appareil ne pourra pas tenir compte d'un signal lui parvenant sur l'une de ses entrées mais ceci n'est pas gênant, puisqu'à ce moment qui intervient assez rarement, le groupe d'appareils correspondant n'est simplement pas alimenté.

L'appareil peut également ne pas se caler sur un front de signal et imposer le début de chaque période T.

Dans un but de simplification lors de l'installation, l'appareil peut en outre comporter des moyens gérés par un microprocesseur et qui, avant qu'il se mette à fonctionner effectivement, sont sensibles aux signaux des régulateurs et affichent la période T ou une moyenne des périodes qu'il détecte sur les régulateurs pour faire fonctionner ensuite l'appareil selon cette période calculée. Dans ce cas aucun réglage de période dans l'appareil n'est nécessaire.

Bien entendu, dans cette forme de réalisation également, l'appareil 29 peut être pourvu de moyens de délestage 29 d sensibles comme dans le cas de la figure 1, au capteur de puissance 22 qui détecte l'apparition d'une surconsommation. Le circuit de l'appareil va alors procéder au délestage d'un au moins des groupes 11', 12' et 13'. Du fait que dans le second mode de mise en oeuvre qui est décrit, la durée d'un fonctionnement réel de chaque groupe 11', 12' et 13' est connue, grâce aux mémoires, et correspond très exactement à la durée pendant laquelle les relais 18, 19 et 20 sont excités, le circuit logique de l'appareil 29 sait quel est ou quels sont les groupes d'appareils effectivement alimentés au moment où survient le signal de délestage et lequel de ces appareils alimenté à fonctionné le plus longtemps. Le circuit de délestage 29 d coupera alors l'alimentation de cet appareil en priorité. Ceci peut aussi être obtenu par une programmation simple d'un microprocesseur.

On a représenté sur la figure 11 l'action du délestage sur les différents groupes d'appareils et, sur la dernière ligne, la puissance W appelée sur des appareils prioritaires tels que par exemple des appareils électroménagers, ceci dans un but de simplicité, sur la base d'un fonctionnement selon la figure 10. On voit sur cette figure qu'au moment T/3 où l'appareil 12' se met en marche, le groupe qui fonctionnait depuis le plus de temps était le groupe 11' et celui-ci est délesté. A l'instant 2T/3, c'est le groupe 12' qui fonctionnait depuis le plus longtemps et il est délesté pendant que le groupe 13' est alimenté. Au nouvel instant 0 correspondant à la fin de la première période T, aucun appareil n'est alimenté et le groupe 11' se met donc en marche.

Comme on l'a vu, il est préféré que la période P soit égale à la période T. Cependant il peut arriver, même éventuellement accidentellement, que cette période P soit différente, et notamment supérieure.

Il peut également arriver que la durée P ne soit pas subdivisée en n parties égales, n'étant le nombre de groupes d'appareils de chauffage, mais en un nombre m de parties comme cela peut arriver par exemple dans le cas de l'appareil 29 qui possède cinq sorties lorsque seules trois sorties sont utilisées et que l'appareil reste réglé pour un fonctionnement à quatre ou cinq sorties. Cependant on peut avantageusement prévoir des moyens susceptibles de détecter le nombre de sorties qui envoient effectivement des signaux de façon à compter ces sorties et à diviser la période par le nombre n ainsi déterminé.

## Revendications

1. Appareil de répartition de puissance pour installations électriques comprenant n groupes d'appareils de chauffage électriques destinés à chauffer chacun une zone de l'habitat, l'une au moins de ces zones étant équipée de moyens de régulation possédant, au moins d'une façon approximative, un cycle dont la durée, appelée période T, comporte normalement une première partie pendant laquelle le groupe d'appareils est alimenté et une seconde partie pendant laquelle ledit groupe est peu, ou pas, alimenté, ledit appareil comprenant des moyens (14; 29) pour provoquer la mise en marche des groupes d'appareils de chauffage respectivement aux instants 0, P/m, 2P/m, ... P, au cours de chaque période, d'une durée P, caractérisé en ce que la durée P est voisine de ou égale à T, et en ce que, m étant un nombre entier supérieur ou égal à n, lesdites moyens (14; 29) n'autorisant l'alimentation d'un groupe d'appareils de chauffage que pendant une durée au plus égale à (m−1)P/m.

2. Appareil selon la revendication 1, caractérisé en ce qu'il agit sur l'alimentation des groupes d'appareils de chauffage par l'intermédiaire de relais ou semiconducteurs de puissance.

3. Appareil selon l'une des revendications 1 et 2, caractérisé en ce qu'il comporte des moyens (29) sensibles au signal des moyens de régulation, d'une, de plusieurs, ou de la totalité des zones qui en sont pourvues pour commander l'alimentation pendant une durée égale à la durée dudit signal.

4. Appareil selon l'une quelconque des revendications 1 à 3, caractérisé en ce qu'il comporte une base de temps interne (14 c, 29 e).

5. Appareil selon l'une quelconque des revendications 1 à 3, caractérisé en ce qu'il est sensible aux signaux de l'un au moins des moyens de régulation.

6. Appareil selon la revendication 5, caractérisé en ce qu'il comporte des moyens sensibles aux bases de temps des moyens de régulation des zones de chauffage pour calculer la durée de la période T et déterminer automatiquement la valeur de la période P.

7. Appareil selon l'une quelconque des revendications 1 à 6, caractérisé en ce qu'il comporte des moyens (29 d) sensibles à la consommation globale instantanée de l'installation et agencés de façon à délester un ou plusieurs groupes d'appareils de chauffage en cas de dépassement d'un seuil de consommation globale.

8. Appareils selon la revendication 7, caractérisé en ce que lesdits moyens (29 d) sont agencés pour délester celui des groupes d'appareils de chauffage qui, tout en étant encore alimenté, a fonctionné le plus longtemps.

## Patentansprüche

1. Leistungsverteilvorrichtung für elektrische Anlagen, die n elektrische Heizgerätegruppen enthalten, die dazu bestimmt sind, jeweils einen Wohnbereich zu erwärmen, wobei wenigstens einer dieser Bereiche mit Einrichtungen zur Regelung ausgerüstet ist, die wenigstens in angenäherter Weise einen Zyklus aufweist, dessen Dauer, genannten Periode T, normalerweise einen ersten Abschnitt, in dem die Gerätegruppe mit Strom versorgt ist, und einen zweiten Abschnitt, in dem die genannte Gruppe wenig oder gar nicht mit Strom versorgt ist, umfaßt, wobei die Vorrichtung Einrichtungen (14; 29) enthält, um das Ingangsetzen der Heizgerätegruppen jeweils zu den Zeitpunkten 0, P/m, 2P/m, ... P im Verlauf einer jeden Periode einer Dauer P zu veranlassen, dadurch gekennzeichnet, daß die Dauer P gleich oder nahezugleich T ist und daß die genannten Einrichtungen (14; 29) die Stromversorgung einer Heizgerätegruppe nur während einer Zeitdauer höchstens gleich (m−1)P/m erlauben, wobei m eine ganze Zahl größer oder gleich n ist.

2. Vorrichtung nach Anspruch 1, dadurch gekennzeichnet, daß sie auf die Stromversorgung von Heizgerätegruppen mittels Relais oder Leistungshalbleitern einwirkt.

3. Vorrichtung nach einem der Ansprüche 1 und 2, dadurch gekennzeichnet, daß sie Einrichtungen (29) enthält, die auf ein Signal der Einrichtungen zur Regelung eines, mehrerer oder der Gesamtheit der Bereiche empfindlich sind, die damit versehen sind, um die Stromversorgung während einer Dauer zu befehlen, die gleich der Dauer des genannten Signals ist.

4. Vorrichtung nach einem der Ansprüche 1 bis 3, dadurch gekennzeichnet, daß sie einen internen Zeitgeber (14c, 29e) enthält.

5. Vorrichtung nach einem der Ansprüche 1 bis 3, dadurch gekennzeichnet, daß sie auf Signale von wenigstens einer der Regeleinrichtungen empfindlich ist.

6. Vorrichtung nach Anspruch 5, dadurch gekennzeichnet, daß sie Einrichtungen enthält, die auf die Zeitgeber der Regeleinrichtungen der Heizbereiche ansprechen, um die Dauer der Periode T zu berechnen und automatisch die Größe der Periode P zu bestimmen.

7. Vorrichtung nach einem der Ansprüche 1 bis 6, dadurch gekennzeichnet, daß sie Einrichtungen (29d) enthält, die auf den augenblicklichen Gesamtverbrauch der Anlage ansprechen und derart betrieben sind, daß sie eine oder mehrere Heizgerätegruppen abschalten, wenn ein Gesamtverbrauchsgrenzwert überschritten wird.

8. Vorrichtungen nach Anspruch 7, dadurch gekennzeichnet, daß die genannten Einrichtungen (29d) derjenigen der Heizgerätegruppen betätigt sind, die, noch ganz im eingeschalteten Zustand, am längsten in Betrieb war.

**Claims**

1. A power distributing appliance for electrical installations comprising n groups of electrically operated heating appliances, each of which is intended to heat one zone of the dwelling, at least one of these zones being equipped with regulating means comprising at least approximately a cycle the duration of which, referred to as the period T, normally comprises a first part during which the group of appliances is supplied and a second part during which the said group is either not supplied or is only supplied to a minor degree, the said appliance comprising means (14, 29) of setting in operation the groups of heating appliances respectively at the points in time 0, P/m, 2P/m, ... P, during the course of each period, for a length of time P, characterised in that the length of time P is close to or equal to T and in that with m representing an integer greater than or equal to n, the said means (14, 29) only allow the supply to a group of heating appliances for a period which is at most equal to $(m-1)P/m$.

2. An appliance according to Claim 1, characterised in that it acts on the supply to groups of heating appliances through the intermediary of power relays or semi-conductors.

3. An appliance according to one of Claims 1 and 2, characterised in that it comprises means (29) sensitive to the signal of regulating means, of one or several or all of the zones which are provided therewith to control the supply for a period of time equal to the duration of the said signal.

4. An appliance according to any one of Claims 1 to 3, characterised in that it comprises an internal time base (14c, 29e).

5. An appliance according to any one of Claims 1 to 3, characterised in that it is sensitive to the signals from at least one of the regulating means.

6. An appliance according to Claim 5, characterised in that it comprises means sensitive to the time bases of the regulating means of the heating zones in order to calculate the duration of the period T and automatically determine the value of the period P.

7. An appliance according to any one of Claims 1 to 6, characterised in that it comprises means (29d) sensitive to the total consumption of the plant at any given moment and arranged to cut off the power to one or a plurality of groups of heating appliances if an overall consumption threshold is exceeded.

8. Appliances according to Claim 7, characterised in that the said means (29d) are designed to cut off the power to that of the groups of heating appliances which, while still being supplied, has operated for the longest period.

Fig. 1

Fig. 3

Fig. 4

*Fig. 2*

*Fig. 7*

*Fig:5*

*Fig:6*

Fig.8

Fig.9

Fig.10

Fig.11